# EUROPEAN PATENT APPLICATION

(11) **EP 1 199 870 A1**
(43) Date of publication of application: **24.04.2002**
(21) Application number: 01307700.3
(22) Date of filing: 11.09.2001
(51) Int. Cl.: H04M 3/42, H04M 1/65

(54) **Mobile telephone recording system and method**

(30) Priority: 16.10.2000 US 688656
(71) Applicant: LUCENT TECHNOLOGIES INC., Murray Hill, New Jersey 07974-0636 (US)
(72) Inventor: Hung-Yao, Yeh, East Hanover, New Jersey 07936 (US)
(74) Representative: Buckley, Christopher Simon Thirsk

(57) **Abstract**

A method and system for recording telephone conversation and/or user memoranda from a mobile phone. Users are provided with the ability to record conversation and memoranda and manage them in a similar manner as voicemail. Components of the recording are integrated within the mobile network system and/or the telephone handset maintaining mobile telephone portability. Advantageously, users of the invention are able to record important information obtained during an ongoing call without the need of a pencil and/or paper.

## Description

### BACKGROUND OF THE INVENTION

### 1. Field of the Invention

This invention relates to mobile communications systems, and more particularly to devices and methods for recording conversation and user memoranda.

### 2. Discussion of the Related Art

The development of telephone systems has seen a variety of recording and playback devices used in combination with stationary telephones. These include, among others, recording devices to record conversations, voicemail, and answering machines. However, the recent proliferation of mobile telephone systems has posed a challenge with regard to the implementation of similar devices in the mobile telephone environment, calling for new ways to meet the size and mobility restraints imposed.

Mobile telephone users, who will typically be using their telephones away from their home or office, frequently do not have a pencil and paper available for recording notes related to a call. As a result, important information may be lost or forgotten. Additionally, a mobile telephone user who might try to take such notes while driving creates a hazard both to the vehicle operator and to occupants of other vehicles. Accordingly, the incorporation of personal organization and management features into mobile telephone systems is a desirable objective.

### SUMMARY OF THE INVENTION

A method and system are disclosed for recording either two-way telephone conversations or one-sided user memoranda over a mobile telephone handset. By engaging a record button on the mobile telephone handset, a user can begin recording one or both sides of a two-way telephone conversation. A preset system option determines whether both sides or just the mobile user's side of the two-way conversation will be recorded, in accord with legal restrictions concerning telephone recordings. The recording process is stopped when the user engages the record button a second time.

In the alternative, the user can record only his or her side of the telephone conversation in the form of a memorandum by pressing and holding the record button while speaking, then releasing it after the memorandum has been recorded. If a one-sided memorandum is being recorded, the memorandum will not be heard by the distant telephone user. Once conversation(s) and/or memoranda recording has been completed, the conversations(s) and/or memoranda are automatically stored and can be further processed and managed in the same manner as voicemail messages.

The invention may be implemented in one of several different configurations including a network-based system, a terminal based system, or a combination. In the network-based voice recording system, recorded conversation and memoranda are diverted to a device located within the mobile switching center for recording. In the terminal based configuration, conversations and memoranda are saved in a memory device integrated within the circuitry of the handset. The invention also envisions a configuration that provides for delayed transmission of recorded conversation and/or memoranda from within the memory located in the handset to memory located in the mobile switching center or other location.

Unlike similar methodologies used for stationary telephone systems, there is no need to attach an additional device to the telephone set. Furthermore, operation of the invention is managed by a control located on the handset.

### BRIEF DESCRIPTION OF THE DRAWINGS

Figure 1 depicts the mobile telephone system network based embodiment of the invention.
Figure 2 shows a flowchart of handset control functions and steps of operation.
Figure 3 depicts the terminal based embodiment of the invention.

### DETAILED DESCRIPTION OF THE INVENTION

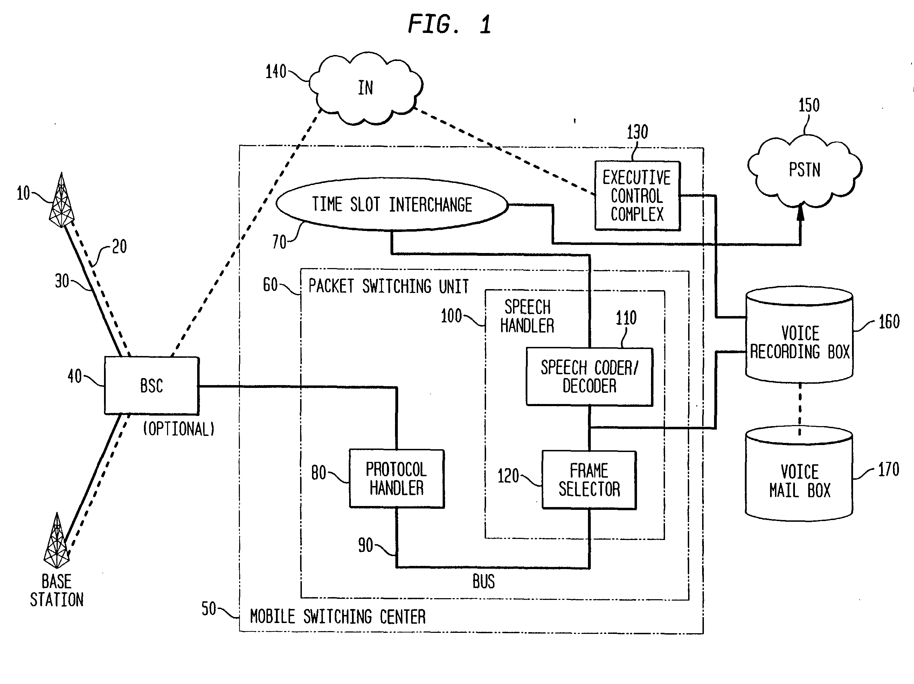

Now referring to Fig. 1 which depicts a block diagram of the components of the network-based embodiment of the invention, it will be apparent that the invention combines new functional elements with existing mobile telephone system technology in a different configuration in order to create new capabilities. As shown in the figure, control signals **20** and communication signals **30** are transmitted between the base station(s) **10** and the base station controller **40** as typically found in mobile telephone systems. The signals in turn, are transmitted from the base station controller **40,** or sometimes directly from the base station(s) **10** in the case of systems which do not use a base station controller, to the packet switching unit **60.** This may be accomplished by means of analog or digital signals (depending upon the particular wireless system), although new systems will typically use digital signals.

Within the packet switching unit **60,** the protocol handler **80** multiplexes communications signals into packets, in turn transmitting them to the speech handler **100** via the switching unit bus **90.** The frame selector **120** identifies and distributes individual packets transmitted over the packet bus with respect to their appropriate channel. All such elements, as described thus far, are typical of mobile telephone systems.

According to this network embodiment of the invention, signals, once identified with respect to a specific channel by the frame selector **120,** can then be recorded using the voice recording box **160.** In a preferred embodiment, the voice recording box **160** will be implemented as a random access disk drive. However, use of other recording methods such as semiconductor memory, tape mechanisms, etc., among others, are also within the contemplation of the invention.

The intelligence network (IN) **140** of a mobile telephone system, which manages network traffic, also controls the recording of conversation or memoranda. This is accomplished in conjunction with the executive control complex (ECC) **130,** sometimes called the executive control processor complex (ECPC). The ECC/ECPC converts instructions provided by the intelligence network **140** into control signals that control the voice recording box **160.**

The ECC **130** operates to control whether signals decoded by the speech coder/decoder **110** from a mobile user will be recorded on the voice recording box **160.** Such operation is responsive to a control input entered by the user indicative that recording a 2-way telephone conversation or a memorandum should begin or end. In a preferred embodiment, the voice recording box **160,** operating in conjunction with the executive control complex **130,** functions as both a recording and a part playback device.

The speech coder/decoder **110** may receive signals transmitted from either the frame selector **120** or from the voice recording box **160.** The speech coder/decoder forms a translation between voice signals and 64 kilobits per second pulse coded modulation (PCM) signals to achieve high-quality speech with minimal channel capacity. After coding/decoding, signals are transmitted to the time slot interchange **70** which allocates the signal to a specific time slot. In turn, signals are transmitted to landline-based parties to a call via the public switched telephone network (PSTN) **150** by means of a switched connection.

In a preferred embodiment of the invention, user control of the system is achieved by means of a simple pushbutton control located on the telephone handset. This preferred design is chosen to simplify control of recording functions. User controls may also be programmed to be input via a key sequence of the handset keyboard.

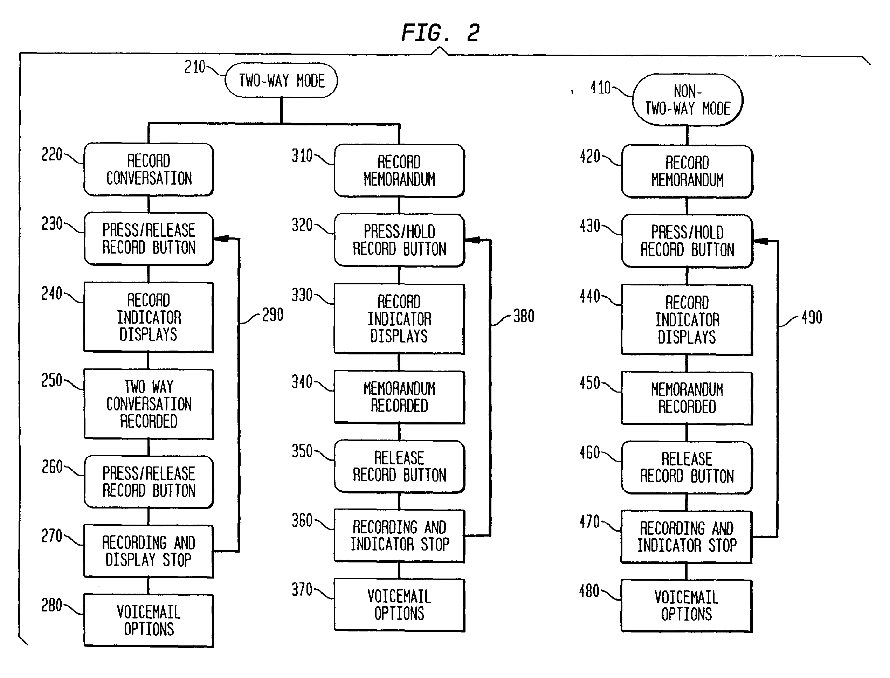

Fig 2. depicts the control function sequence of the method of the invention. In accordance with the depicted method, the system may be used to record a two-way conversation or only the mobile user's portion of the conversation (or memoranda by the mobile user) in a two-way conversational mode **310** or a user-only, one-sided memorandum in a non-two-way mode **410.**

Recording of telephone conversations **220** are initiated **230** and stopped **260** by momentarily engaging a signaling button or entering a defined key sequence at the mobile terminal. An indicator display, which may be implemented as a liquid crystal display, LED or other means **240** provides user confirmation of the control input having been entered. The user may string together multiple recorded segments by iteratively repeating **290** the starting **230** and stopping **260** of the recording function during a given conversation. At the end of the conversation, the recorded conversation, or string of recorded conversation segments is automatically saved in the same manner as an inbound voicemail would be saved in the case of typical prior art voicemail systems. From that point, messages can be managed **280** using known voicemail techniques.

In addition, mobile users may record only the user's side of a two-way conversation **310,** or a non-conversation user-only memorandum **410.** In a preferred embodiment of the invention, such user-only memoranda are recorded by maintaining engagement of the signaling button during the entire recording **320**, **430.** During such a recording of a user memorandum in the course of a two-way conversation, the user's recorded message is not transmitted to the other party of the conversation. Users can string a series of memoranda together by repeatedly pressing the record button **380, 490** to record sections of memoranda. Once a user command other than for recording memoranda is initiated by the user, the recorded memoranda or string of memoranda are automatically saved to a storage medium, such as a voicemail box, in the same manner as for two sided conversations.

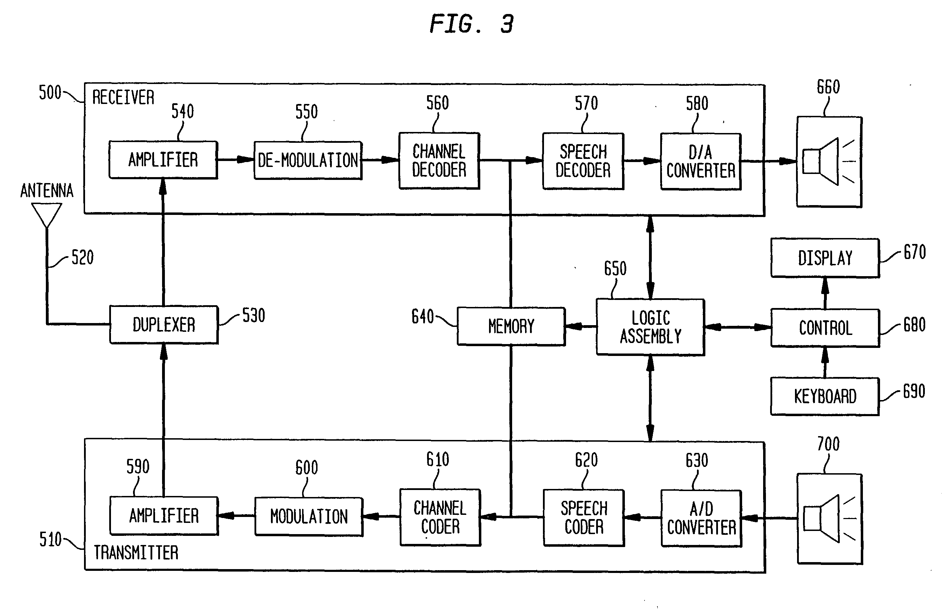

Fig. 3 depicts a second embodiment of the invention in which the recording functions are implemented within the mobile telephone terminal instead of being implemented on the network side of the mobile telephone system. This reference to the functional elements of a typical mobile terminal, as depicted in the figure, the antenna **520** and duplexer **530** provide for alternatively transmitting and receiving signals to/from a wireless communications network with which the mobile terminal is in contact. The receiver **500** and transmitter **510** components of the mobile terminal perform the complimentary functions of (1) amplification of radio frequency signals **540, 590,** (2) demodulation/modulation **550, 600 --** *i.e*., translation between radio frequency signals and voice frequency signals, (3) channel decoding/coding **560, 610 --** *i.e*., coding signals in such a manner as to reduce impairments due to transmission errors, (4) speech decoding/coding **570, 620 --** *i.e.,* compression of speech signals for transmission efficiency and (5) digital/analog conversion **580, 630 --** *i.e.,* translation between digital and analog, voice frequency signals.

According to this embodiment of the invention, speech is recorded in memory **640,** which may be provided in the form of a semiconductor or other similar memory chip or other device. The memory **640** component may be implemented to allocate a portion of system memory for storage of recorded speech, subject to control by the logic assembly **650** or it may be a separate memory that is solely dedicated to storage of recorded speech.

The logic assembly **650** is programmed to receive and process user control commands **680.** The user control commends for this terminal embodiment will be implemented to carry out the one-way/two-way recording functions in an essentially similar manner as was described for the network embodiment of the invention. Implementation of such control commands by the logic assembly may be accomplished by various techniques well known in the art.

In addition to storing recorded speech in memory **640,** for immediate or later playback, this terminal embodiment of the invention contemplates the implementation of temporary speech storage or buffering in memory **640.** Such buffered speech can be transmitted on a delayed basis, under control of the logic assembly **650,** to another location -- *e.g*. a network based voice recording system or a voicemail system -- to improve traffic management. Alternatively such a terminal-based speech buffering arrangement can provide a temporary store and forward option.

Although the system and method of the invention, and illustrative applications have been described in detail, it should be understood that various changes, alterations, and substitutions may be made therein without departing from the spirit and scope of the invention as defined by the appended claims.

## Claims

1. In a wireless telecommunications system, a system for recording portions of an ongoing call involving at least one mobile user, said recording system comprising:
a signaling device operable by said mobile user for signaling an intent to begin or end recording;
a control mechanism operable to receive and act on signals from said signaling device;
a recording mechanism responsive to said control mechanism for initiating and ending a recording of said portions of an ongoing call; and
a storage device for storing said recorded portions of said ongoing call.

2. The recording system of claim 1 wherein said control mechanism and said recording mechanism are implemented on a network side of said wireless telecommunications system and further comprise:
an executive control complex programmed to control said recording of said portions of said ongoing call; and
a network based voice recording box for recording conversation.

3. The recording system of claim 1 wherein said control mechanism and said recording mechanism are implemented within a wireless terminal operated by said mobile user and further comprising:
a logic assembly programmed to store said recorded portions of said ongoing call based upon user command.

4. The recording system of claim 1 wherein said recorded portion of said ongoing call comprises only said mobile user's side of said ongoing call.

5. In a wireless telecommunications system, a method for recording portions of an ongoing call involving at least one mobile user, said method comprising the steps of:
initiating a user control to engage and disengage a recording function;
communicating said user control to a recording mechanism, said recording mechanism being responsive to said user control for initiating and ending a recording of said portions of an ongoing call
causing portions of said ongoing call recorded by said recording mechanism to be stored in a storage device.
